# EUROPÄISCHE PATENTSCHRIFT

(11) **EP 1 243 302 B1**
(45) Veröffentlichungstag und Bekanntmachung des Hinweises auf die Patenterteilung: **16.03.2005**
(21) Anmeldenummer: 01130692.5
(22) Anmeldetag: 21.12.2001
(51) Int. Cl.: B01D 29/48

(54) **Filterkerze**
Filter candle
Bougie filtrante

(30) Priorität: 19.03.2001 EP 01106844
(43) Veröffentlichungstag der Anmeldung: 25.09.2002
(73) Patentinhaber: Anton Steinecker Maschinenfabrik GmbH, 85356 Freising-Attaching (DE)
(72) Erfinder: Banke, Friedrich, 84416 Inning am Holz (DE); Flossmann, Rudolf, 85416 Langenbach (DE); Hahn, Adolf, 92726 Waidhaus (DE); Kain, Josef, 85417 Marzling (DE)
(74) Vertreter: Grünecker, Kinkeldey, Stockmair & Schwanhäusser Anwaltssozietät

(56) Entgegenhaltungen:
- EP-A- 0 203 206
- EP-A- 0 259 696
- EP-A- 0 933 114
- DE-C- 602 834
- FR-A- 864 853
- US-A- 4 456 531

## Beschreibung

Die Erfindung betrifft ein Verfahren zur Filtration und/oder Stabilisierung von Fluiden, insbesondere Bier, sowie eine Filterkerze zur Durchführung des Verfahrens, mit einem rohrförmigen Filterkörper, der aus einem spiralförmig gewundenen Draht gebildet ist, wobei Spalte zwischen den Drahtwindungen als Fluiddurchlässe vorgesehen sind und einen Anschwemmfilter.

Aus der EP-A-0 203 206 ist bereits eine Filterkerze mit einer Drahtstärke von 0,25 mm und einer Spaltbreite von 80 µm bekannt, wobei der Draht über ein Lochblech gewickelt wird, um ausreichende Stabilität des doch sehr dünnen Drahtes zu gewährleisten.

Die Druckschrift DE 602 834, US-A--4 456 531, EP-A-0 259 696 sowie EP-A-0 933 114 betreffen keine Anschwemmfilter und weisen Filterkerzen mit einer Drahtstärke ≤ 1 mm auf. Die Druckschrift FR 864 853 A beschreibt ebenfalls einen Anschwemmfilter, der eine Drahtbreite von etwa 1 mm und eine Spaltbreite von 0,02 bis 0,05 mm aufweist.

Anschwemmfilter werden insbesondere bei der Bierherstellung benötigt, um die im Bier enthaltenen Trübstoffe herauszufiltem und/oder das Bier zu stabilisieren. Bei einem bekannten Anschwemmfilter werden Filterkerzen eingesetzt, bei denen der Filterkörper einen gewundenen Draht aufweist, wobei Spalte zwischen den Drahtwindungen als Fluiddurchlässe dienen. Die Filterkerzen des Anschwemmfilters sind in einem Unfiltratraum angeordnet und leiten das Filtrat dann weiter in einen Filtratbereich. Zur Filtration werden dem zu filternden Bierfilter Hilfsmittel, wie z.B. Kieselgur, Zellulose, Perlite, Aktivkohle, Kunststofffasern, Stabilisiermittel z.B. PVPP (Polyvinylpolypyrrolidon), Glasfasern oder Zellstofffasern etc. zugesetzt. Die Filterhilfsmittel werden bei der Anschwemmfiltration vor der eigentlichen Filtration an der Außenfläche des Filterkörpers angeschwemmt, so dass eine Anschwemmschicht ausgebildet wird, die wiederum als Filterschicht dient. Bei der Filtration wird zur Aufrechterhaltung der Porosität des Filterkuchens laufend Filterhilfsmittel ("Bodyfeed") zudosiert.

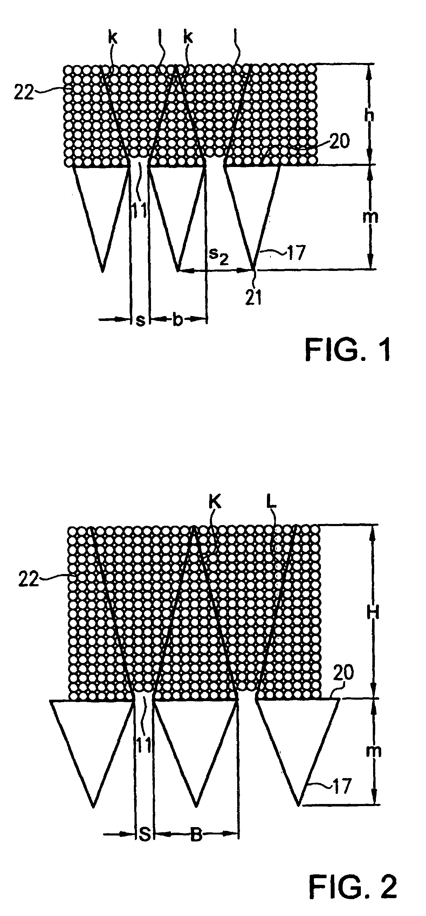

Die Dicke der Voranschwemmschicht wird so gewählt, dass eine gleichmäßige Filtratabfuhr über die gesamte Oberfläche der Filterkörper zu Beginn der eigentlichen Filtration sichergestellt ist. Hierbei kommt der Voranschwemmschicht die Aufgabe einer Drainage zu, d.h., einen gleichmäßigen freien Filterabfluss von der Oberfläche der Filterkörper zu den Spalten zwischen den Drähten zu schaffen. Das Filterhilfsmittel überbrückt als Drainageschicht hierbei die geschlossenen Bereiche der zyl. Filterfläche zur Filtratabfuhr (s. hierzu Figur 2). Bei konventionellen Kerzenfiltem wird durch die bekannte Strömungsproblematik - d.h., den Abfall der durchschnittlichen Vertikalströmung auf nahezu Null zum oberen Ende der Filterkerze - die erforderliche Gesamtmenge bzw. Höhe der Voranschwemmschicht durch die Schwachstelle am oberen Ende der Filterkerze bestimmt. Bei konventionellen Filtern wird die Menge an zudosierten Filterhilfsmitteln daher so hoch bemessen, dass auch noch diese Schwachstelle am oberen Ende derFilterkerze ausreichend angeschwemmt wird. Dadurch weist die Filterkerze überwiegend bis an über 90% ihrer Oberfläche eine erheblich dickere Anschwemmschicht als erforderlich auf. Somit kommt es zu einem größeren Verbrauch an Filterhilfsmitteln und somit zu erhöhten Filtrationskosten. Aufgrund dieses Problems ist auch die Länge der Filterkerzen auf 1,2 bis 2 m beschränkt. Bei den üblichen Filterkerzen zur Anschwemmfiltration, die auf der Spaltwickeldrahttechnologie basieren, werden Drahtbreiten ≥ 1 mm bei Spaltbreiten von 30 bis 80 µm verwendet.

Der vorliegenden Erfindung liegt somit die Aufgabe zugrunde ein Verfahren sowie eine Filterkerze zur Durchführung des Verfahrens bereitzustellen, das es ermöglicht, die Menge an Filterhilfsmitteln zu reduzieren und somit gleichzeitig die Filtrationskosten zu senken.

Erfindungsgemäß wird diese Aufgabe durch die Merkmale der Ansprüche 1 und 2 gelöst.

Da sich gezeigt hat, dass die erforderliche Höhe der Voranschwemmschicht zur Erreichung der erforderlichen gleichmäßigen Filtratabfuhr u.a. von der Breite b des Drahtes abhängt, da das Filterhilfsmittel den undurchlässigen Bereich des Drahtes bis zum nächsten Spalt überbrücken muss, kann durch die Verwendung von Drahtbreiten unter 1 mm die Höhe der Voranschwemmschicht entsprechend der Reduzierung der Drahtbreite auf 1,5 bis 2,4 mm reduziert werden. Um eine gleichmäßige Filtratabfuhr durch die Voranschwemmung zu erzielen ist eine Anschwemmdicke von ca. 3 x Drahtbreite erforderlich, d.h., bei Verwendung von Drähten mit Breiten von 0,80 oder 0,50 mm lässt sich der Wert auf 2,4 bzw. 1,5 mm reduzieren. Somit lässt sich eine Einsparung von beispielsweise 20 bis 100% der Voranschwemmung erzielen. Da diese Menge in den Gesamtfilterhilfsmittelverbrauch pro Menge Filtrat einfließt, kann hiermit der spezifische Verbrauch an Filterhilfsmittel pro Filtratmenge deutlich reduziert werden. Somit sinken auch die Kosten für die Filtration. Dadurch, dass die Drahtbreite auf < 1 mm reduziert wird, ohne dass jedoch die Spaltbreite s verringert werden muss, wird der Durchsatz des Filtrats nicht beeinträchtigt. Die relative freie (offene) Filterfläche wird sogar größer.

Gemäß einer ersten Ausführungsform sind die Außenflächen parallel zur Längsachse L der Filterkerze. Derartige Filterkerzen sind einfach zu fertigen. Die Breite b der Außenfläche liegt zwischen 0,5 und 0,8 mm. In diesem Bereich lässt sich die erforderliche Voranschwemmhöhe wesentlich reduzieren, wobei gleichzeitig ausreichende Stabilität gewährleistet ist. Die Filterkerzen 2 bis 4 m hoch, insbesondere 2 bis 3. Filterkerzen mit einer Höhe größer als 2m erlauben einen größeren Durchsatz im Vergleich zum Stand der Technik.

Gemäß einem weiteren Ausführungsbeispiel sind die Außenflächen unter einem Winkel a in Bezug auf die Längsachse der Filterkerze geneigt. Dies führt zu einer verbesserten Anhaftung des Filterhilfsmittels.

Gemäß einem bevorzugten Ausführungsbeispiel weist der Draht einen sich in Bezug auf die Filterkerze nach innen verjüngenden Querschnitt auf, der entweder im Wesentlichen dreieck- oder viereckförmig ist.

Wenn der spiralförmig gewickelte Draht von einem innenliegenden Träger gestützt wird, ist es möglich sehr dünne Drähte zu verwenden, die ansonsten aufgrund ihrer Instabilität nicht verwendbar sind. In vorteilhafter Weise ist als Träger ein Innenkörper, insbesondere ein Innenrohr angeordnet, um das der Draht über Abstandshalter gewunden ist. Diese Konstruktion bringt eine außerordentlich große Stabilität der Filterkerze mit sich und führt darüber hinaus zu einer Volumenreduktion in der Filterkerze.

Gemäß einem bevorzugten Ausführungsbeispiel sind die Filterkerzen nicht in einem herkömmlichen Filterkessel mit Lochplatte angeordnet, sondern münden in einen Registerablauf. Vorzugsweise weist der Anschwemmfilter darüber hinaus eine Bypassleitung für das Unfiltrat auf. Das Problem der über die Höhe ungleichen Anschwemmung kann durch die Bypass-Strömung eliminiert werden. Hierdurch reduziert sich die erforderliche Voranschwemmmenge. In diesem Fall ist die erforderliche VA-Menge lediglich von der Drahtgeometrie, wie nachfolgend beschrieben, abhängig.

Die vorliegende Erfindung wird nachfolgend unter Bezugnahme der folgenden Figuren näher erläutert:
- Figur 1: zeigt einen Ausschnitt eines Querschnitts eines spiralförmig gewundenen Drahtes mit einer Voranschwemmschicht gemäß einem ersten Ausführungsbeispiel der vorliegenden Erfindung,
- Figur 2: zeigt als Vergleichsbeispiel einen Ausschnitt eines Querschnitts eines spiralförmig gewundenen Drahtes mit einer größeren Breite,
- Figur 3a: zeigt schematisch einen Längsschnitt durch eine Ausführungsform der erfindungsgemäßen Filterkerze,
- Figur 3b: zeigt einen Schnitt entlang der Linie A-A der Figur 1,
- Figur 4: zeigt einen Ausschnitt eines Querschnitts eines spiralförmig gewundenen Drahtes gemäß einem zweiten Ausführungsbeispiel der vorliegenden findung,
- Figur 5: zeigt eine Vergrößerung des Ausschnitts "y" in Figur 4 und
- Figur 6: zeigt einen schematischen Schnitt durch einen Anschwemmfilter, der die erfindungsgemäße Filterkerze aufweist.
- Figur 7: zeigt einen schematischen Schnitt durch eine weitere Ausführungsform eines Anschwemmfilters, der die erfindungsgemäßen Filterkerzen aufweist.

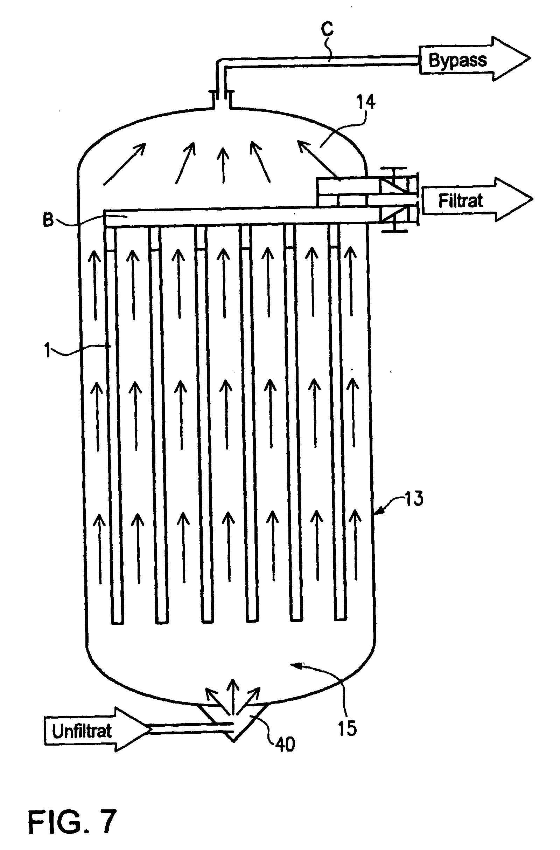

Vorteilhafterweise werden, wie aus Fig. 7 hervorgeht, die erfindungsgemäßen Filterkerzen 1 zum Filtrieren von Fluiden, insbesondere Bier, in einem Unfiltratraum 15 an einem Rohrregister B zur Abfuhr des Filtrats eingesetzt. Der Filterkessel weist weiter einen Unfiltratbypass C auf, der oberhalb der Filterkerzen 1 angeordnet ist, und Unfiltrat dem Unfiltratraum 15 entweder durch den Unfiltrateinlass 40 oder aber einen nicht gezeigten separaten weiteren Einlass erneut zuzuführen, wodurch es zu einer gerichteten Bypassströmung und einer gleichmäßigeren Anschwemmung kommt. Durch den Unfiltratbypass C kann eine ideale Verteilung des Filterhilfsmittels eingestellt werden, so dass die erfindungsgemäße Filterkerze 1 hierbei besonders vorteilhaft ist.

Alternativ kann die erfindungsgemäße Filterkerze auch in einem anderen Ausführungsbeispiel vorteilhaft eingesetzt werden.

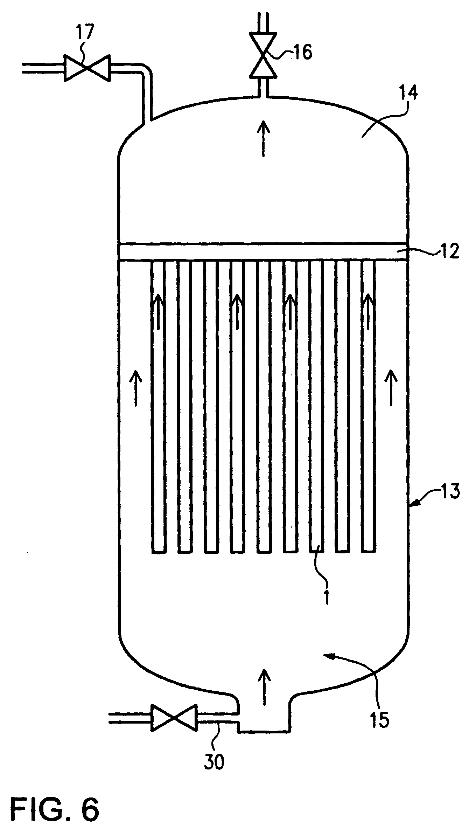

Wie aus Figur 6 hervorgeht, können die erfindungsgemäßen Filterkerzen zur Filtrierung von Fluiden, insbesondere von Bier, in einem Unfiltratraum 15 eines Filterkessels 13 aufgehängt sein. In diesem Fall sind die Filterkerzen an einer Trennwand 12 befestigt, die den Filterkessel 13 in einen Filtratraum 14 und einen Unfiltratraum 15 unterteilt. Das zu filtrierende Fluid, wie z.B. Bier, dem ein Filterhilfsmittel, z.B. Kieselgur, zugesetzt worden ist, wird über den Einlass 30 in den Unfiltratraum des Filterkessels 13 eingeleitet. Von dort tritt es durch die Voranschwemmschicht 22 (s. Figur 1), die sich vor und während der Filtration durch Anlagerung von Filterhilfsmittel, z.B. von Kieselgur, auf der Außenfläche der Filterkerzen gebildet hat, hindurch und gelangt dann durch die von den Spalten 11 zwischen den Drahtwindungen 17 gebildeten Fluideinlässen 11 in den Innenraum der Filterkerze 1 (s. Figur 2) und wird schließlich in den Filtratraum 14 weitergeleitet, wo es dann über einen Auslass 16 aus dem Filterkessel austritt. Die bei der Voranschwemmung erzeugte Voranschwemmschicht beträgt gemäß der Erfindung eine Mindesthöhe h von 1,5 bis 2,4 mm im oberen Bereich der Filterkerze.

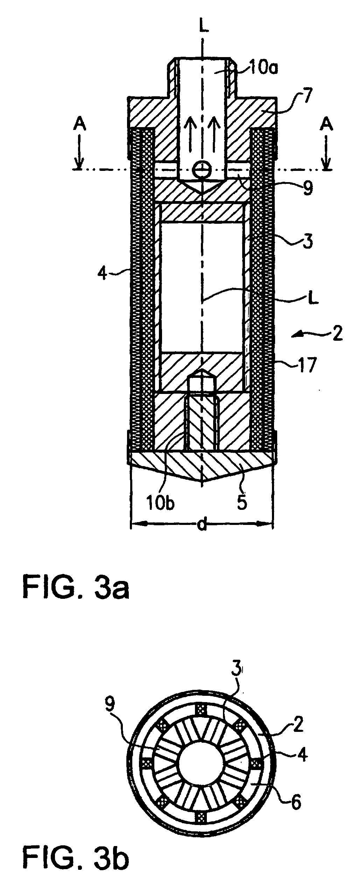

Wie aus Figur 3a hervorgeht, weist die Filterkerze 1 einen Filterkörper 2 auf, der aus einem spiralförmig gewundenen Draht 17 gebildet ist. Der Filterkörper ist über Abstandshalter 4 mit einem Innenkörper mit geschlossenem Außenmantel, hier ein Innenrohr 3, das zur Volumenreduzierung des Innenraums des Filterkörpers 2 dient, verbunden. Der gewundene Draht 17 wird so durch das Innenrohr 3 mit den Abstandshaltern 4 gehalten und getragen. Durch das Innenrohr 3, die Abstandshalter 4 und den gewundenen Draht 17 ergeben sich Filtratkanäle 6 (Figur 3b), durch die das Filtrat durch die Filterkerze nach oben zu den Aussparungen 9 und von dort aus über das Kopfteil 7 in den Filtratbereich 14 strömen kann. Der Filterkörper 2 ist durch ein Kopfteil 7 und ein Endteil 5 verschlossen. Die Erfindung ist aber nicht auf diese Ausführungsform beschränkt, selbstverständlich kann der Draht mit den erfindungsgemäßen Abmessungen auch durch eine unterschiedliche Trägerkonstruktion, z.B. durch verschweißte Stützdrähte, die sich in axialer Richtung erstrecken, gestützt werden oder aber selbsttragend sein.

Figur 1 zeigt einen Ausschnitt eines Querschnitts durch den spiralförmig gewundenen Draht 17 gemäß einem ersten Ausführungsbeispiel der vorliegenden Erfindung. Hier weist der Draht einen sich in Bezug auf die Filterkerze 2 nach innen verjüngenden Querschnitt auf, der im Wesentlichen dreieckig ist. In Figur 1 stellt das Bezugszeichen 20 die Außenfläche einer Drahtwindung dar, die auf der Außenseite der Filterkerze liegt. Die Außenfläche 20 des gewundenen Drahtes weist eine Breite b < 1 mm, vorzugsweise 0,5 bis 0,8 mm auf. Die Spaltbreite s an der Außenfläche zwischen zwei Drahtwindungen liegt im Bereich von 0,03 bis 0,08 mm.

Die Spaltbreite s₂ nimmt zur Innenseite der Filterkerze zu und beträgt maximal b + s.

Die Tiefe m des Drahtes 17 beträgt 1 - 2,5 mm. Wie aus Figur 1 hervorgeht, ergibt sich für die zuvor genannten Abmessungen eine maximale Voranschwemmschichthöhe h von 1,5 bis 2,4 mm, die erforderlich ist, um die filtrationstechnisch geforderten Qualitäten zu erzielen und die um 20 bis 100% niedriger als im Stand der Technik ist. Wie durch die Linien k und l, die einen Mündungsbereich darstellen, angedeutet ist, kommt der Voranschwemmung die Aufgabe einer Drainage zu, d.h. einen freien Filterabfluss von der gesamten Oberfläche der Filterkerze zu den Spalten 11 zwischen den Drähten 17. Da das Filtrat in den Bereichen oberhalb der Drähte nicht abfließen kann, überbrückt das Filterhilfsmittel die Filtratabfuhr in den Bereichen der Filterdrähte. Somit kann beispielsweise der Oberflächenbereich zwischen den Linien k und I Flüssigkeit durch den Spalt 11 abführen, so dass sichergestellt ist, dass über die gesamte Filterkerzenoberfläche eine gleichmäßige Filtratabfuhr erfolgen kann.

Wie aus dem Vergleich der Figuren 1 und 2 hervorgeht, ist die erforderliche Höhe der Voranschwemmschicht, die notwendig ist, damit eine gleichmäßige Filtratabfuhr erfolgen kann, von der Dicke b des Drahtes 17 abhängig, da beispielsweise bei einer größeren Breite B (s. Figur 2) ein größerer Bereich von dem Filterhilfsmittel überbrückt werden muss, um für eine gleichmäßige Filtratabfuhr zu sorgen. Wenn beispielsweise die Breite B der Außenfläche des Drahtes 17 > 1 mm ist, ist beispielsweise eine Höhe H der Voranschwemmschicht von mindestens 3 mm notwendig, die um 20 bis 100% höher als die mindest erforderliche Voranschwemmschichthöhe gemäß der vorliegenden Erfindung ist. Die Abmessungen s für die Spaltbreite sowie die Tiefe m unterscheiden sich beim Vergleichsbeispiel, das in Figur 2 gezeigt ist, nicht von dem in Figur 1 gezeigten Ausführungsbeispiel. Aufgrund der zuvor erläuterten geometrischen Abhängigkeit der erforderlichen Anschwemmhöhe h von der Drahtbreite b ist es ersichtlich, dass bei Reduzierung der Drahtbreite b auch die erforderliche Anschwemmhöhe h bei gleicher Spaltbreite s abnimmt, wobei h ≈ 3 · b.

Bei dem zuvor gezeigten Ausführungsbeispiel, das in Figur 1 und 2 gezeigt ist, liegen die Außenflächen parallel zur Längsachse L der Filterkerze.

Gemäß einem zweiten Ausführungsbeispiel sind die Außenflächen 20 unter einem Winkel (α) in Bezug auf die Längsachse L der Filterkerze geneigt.

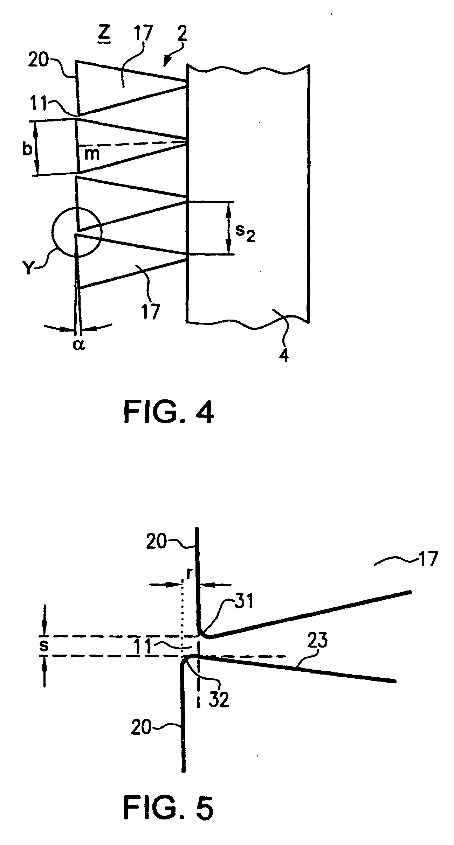

Wie aus Figur 4 hervorgeht, weist der spiralförmig gewundene Draht 17, der hier mit dem Abstandselement 4, das sich stabförmig in Längsrichtung des Filterkörpers 2 erstreckt, wie in Figur 3a, b gezeigt, verschweißt ist, eine im Wesentlichen dreieckige Querschnittsform auf. Die Grundlinie b des spitzwinkeligen Dreiecks, d.h. die Breite der Drahtwindung, liegt auf der Außenseite des Filterkörpers 2. Die Breite b ist < 1 mm und liegt vorzugsweise zwischen 0,5 und 0,8 mm. Die Höhe m des spitzwinkeligen Dreiecks beträgt von 1 bis 2,5 mm. Die Außenfläche 20 des gewundenen Drahtes 17, die die Außenseite des Filterkörpers 2 bildet, ist unter einem Winkel α in Bezug auf die Längsachse L der Filterkerze geneigt. Dieser Winkel α beträgt ca. 1 bis 10° und liegt vorzugsweise in einem Bereich von 3 bis 5°. Die schräge Fläche 20 kann entweder durch Schrägwicklung des Drahtes 17 erreicht werden oder dadurch, dass die Querschnittsform des Drahtes 17 so gewählt wird, dass der Querschnitt des Dreiecks kein gleichschenkliges spitzwinkliges Dreieck, sondern ein nicht gleichschenkliges spitzwinkliges Dreieck ist, wodurch sich auch die Schrägstellung der Fläche ergibt. Die Unterkante 31 der geneigten Fläche 20 einer ersten Drahtwindung ist nach innen zu der Oberkante 32 der geneigten Fläche 20 einer darunterliegenden Drahtwindung versetzt. Der Versatz r (Figur 3) entspricht dem Abstand zwischen einer ersten Ebene, die entlang der geneigten Fläche 20 einer ersten Windung gedacht ist, zu einer zweiten Ebene, die entlang der geneigten Fläche 20 einer nachfolgenden Windung verläuft. Der radiale Versatz r liegt zwischen ca. 0,05 bis ca. 0,2 mm. Durch den Versatz der Unterkante 31 zu der Oberkante 32 steht die Oberkante 32 jeweils nach außen gegenüber der darüberliegenden Unterkante hervor, so dass sich hier sehr leicht Filterhilfsmittel als Anschwemmschicht anlagem und gegen ein Herabrutschen gesichert festsetzen kann. Alle Unterkanten 31 der geneigten Fläche 20 liegen auf einer zur Längsachse L des Filterkörpers parallelen Gerade und alle Oberkanten 32 der geneigten Flächen 20 liegen auf einer zweiten zur Längsachse L parallelen Geraden. Somit weist der Filterkörper 2 über eine Länge L einen konstanten Durchmesser auf. Die spaltbreite s kann 0,03 - 0,08 mm betragen.

Bei dem gezeigten Ausführungsbeispiel liegt die Oberkante des gewundenen Drahtes in Bezug auf die Filterkörperachse weiter außen als die Unterkante des Drahtes. Die vorliegende Erfindung soll jedoch nicht hierauf beschränkt sein, da es auch, wenn auch nicht explizit dargestellt, möglich ist, dass die Unterkante des gewundenen Drahtes in Bezug zur Längsachse L des Filterkörpers 2 im Vergleich zur Oberkante weiter außen liegt, also die Neigung entgegengesetzt zu der in den Figuren dargestellten Neigung ist. Auch hier ermöglicht die ungleichmäßige Oberfläche eine bessere Anlagerung der Anschwemmschicht, wobei sich außerdem noch eine vereinfachte Rückspülung ergibt.

Ebenso wie im ersten Ausführungsbeispiel ergibt sich aufgrund der verringerten Breite b der Außenfläche 20 des Drahtes eine geringere Höhe h für die Voranschwemmschicht.

Bei Verwendung der Kerzen in einem Register mit überlagerter Bypassströmung können sehr lange Kerzen bis 4 m eingesetzt werden, da durch den Bypass die Probematik des letzten oberen Endes nicht mehr zutage tritt und hierbei die Wirkung des dünneren Drahtes in Form einer reduzierten erforderlichen Voranschwemmung besonders zum Tragen kommt.

## Patentansprüche

1. Verfahren zur Filtration und/oder Stabilisierung von Fluiden, insbesondere von Bier, mit einem Anschwemmfilter, der Filterkerzen umfasst, mit folgenden Schritten:
- Anschwemmen vonFilterhilfsmittel an die Außenfläche der Filterkerze, die aus einem spiralförmig gewundenen Draht gebildet ist, wobei die Außenfläche einer Drahtwindung eine Breite 0,5 bis 0,8 mm aufweist und der Spalt zwischen den Drahtwindungen s an der Außenfläche der Filterkerze in einem Bereich von 0,03 bis 0,08 mm liegt,
- Erzeugen einer Voranschwemmschicht mit einer kleinsten Höhe h von 1,5 bis 2,4 mm auf der Außenfläche und
- Leiten von Unfiltrat über die Voranschwemmschicht durch den Spalt zwischen den Drahtwindungen, wobei das Filtrat erzeugt wird.

2. Filterkerze zur Durchführung des Verfahrens nach Anspruch 1, mit einem rohrförmigen Filterkörper (2), der aus einem spiralförmig gewundenen Draht (17) gebildet ist, wobei Spalte (11) zwischen den Drahtwindungen als Fluiddurchlässe vorgesehen sind,
**dadurch gekennzeichnet, dass**
die Außenfläche (20) einer Drahtwindung, die auf der Außenseite des Filterkörpers (2) liegt, eine Breite von 0,5 bis 0,8 mm aufweist und eine Spaltbreite s zwischen den Drahtwindungen in einem Bereich von 0,03 bis 0,08 mm liegt, und dass die Höhe der Filterkerze 2 bis 4 m, insbesondere 2 bis 3 m, beträgt.

3. Filterkerze nach Anspruch 2,
**dadurch gekennzeichnet, dass**
die Außenflächen (20) parallel zur Längsachse (L) der Filterkerze (1) liegen.

4. Filterkerze nach Anspruch 2,
**dadurch gekennzeichnet, dass**
die Außenflächen (20) unter einem Winkel (α) in Bezug auf die Längsachse L der Filterkerze geneigt sind.

5. Filterkerze nach mindestens einem der vorhergehenden Ansprüche,
**dadurch gekennzeichnet, dass**
der Draht (17) einen sich in Bezug auf den Filterkörper (2) nach innen verjüngenden Querschnitt aufweist, der entweder im Wesentlichen dreieckförmig oder viereckförmig ist.

6. Filterkerze nach mindestens einem der vorhergehenden Ansprüche,
**dadurch gekennzeichnet, dass**
der Draht (17) von einem innenliegenden Träger (3, 4) gestützt wird.

7. Filterkerze nach Anspruch 2,
**dadurch gekennzeichnet, dass**
als Träger ein Innenkörper (3), insbesondere ein Innenrohr (3) angeordnet ist, um das der Draht (17) über Abstandshalter (4) gewunden ist.

8. Anschwemmfilter mit einem Filterkessel (13), in dem zur Filtrierung von Fluiden Filterkerzen (1) gemäß den Ansprüchen 3 bis 10 angeordnet sind.

9. Anschwemmfilter nach Anspruch 8, bei dem die Filterkerzen in einen Registerablauf (B) münden.

10. Anschwemmfilter nach Anspruch 9, der weiter eine Bypassleitung (C) für Unfiltrat umfasst.

## Claims

1. Method for the filtration and/or stabilization of fluids, in particular of beer, with a coating filter which comprises filter candles, having the following steps:
- coating of filter aids onto the outer face of the filter candle which is formed from a spirally wound wire, the outer face of a wire turn having a width of 0.5 to 0.8 mm, and the gap between the wire turns s on the outer face of the filter candle being in a range of 0.03 to 0.08 mm,
- generation of a precoating layer with a smallest height h of 1.5 to 2.4 mm on the outer face, and
- conduction of unfiltrate via the precoating layer through the gap between the wire turns, the filtrate being generated.

2. Filter candle for carrying out the method according to Claim 1, with a tubular filter body (2) which is formed from a spirally wound wire (17), gaps (11) between the wire turns being provided as fluid passages, **characterized in that** the outer face (20) of a wire turn which lies on the outside of the filter body (2) has a width of 0.5 to 0.8 mm, and a gap width s between the wire turns in a range of 0.03 to 0.08 mm, and **in that** the height of the filter candle is 2 to 4 m, in particular 2 to 3 m.

3. Filter candle according to Claim 2, **characterized in that** the outer faces (20) lie parallel to the longitudinal axis (L) of the filter candle (1).

4. Filter candle according to Claim 2, **characterized in that** the outer faces (20) are inclined at an angle (α) with respect to the longitudinal axis (L) of the filter candle.

5. Filter candle according to at least one of the preceding claims, **characterized in that** the wire (17) has a cross section which narrows inwards with respect to the filter body (2) and which is either essentially triangular or quadrangular.

6. Filter candle according to at least one of the preceding claims, **characterized in that** the wire (17) is supported by an internal carrier (3, 4).

7. Filter candle according to Claim 2, **characterized in that** an inner body (3), in particular an inner tube (3), around which the wire (17) is wound via spacers (4), is arranged as a carrier.

8. Coating filter with a filter boiler (13), in which filter candles (1) according to Claims 3 to 10 are arranged for the filtration of fluids.

9. Coating filter according to Claim 8, in which the filter candles issue into a register outflow (B).

10. Coating filter according to Claim 9, which further comprises a bypass line (C) for unfiltrate.

## Revendications

1. Procédé de filtration et/ou de stabilisation de fluides, en particulier de bière avec un filtre à alluvionnage, comportant des bougies filtrantes, qui comprend les étapes consistant à :
- faire se déposer des adjuvants filtrants à la surface extérieure de la bougie filtrante, qui est constituée d'un fil enroulé en spirale, la surface extérieure d'une spire de fil présentant une largeur de 0,5 à 0,8 mm et la fente entre les spires de fil s à la surface extérieure de la bougie filtrante se situant dans une plage de 0,03 à 0,08 mm,
- créer une pré-couche d'une hauteur h minimale de 1,5 à 2,4 mm sur la surface extérieure et
- guider le moût non filtré sur la pré-couche à travers la fente située entre les spires de fil, ce qui crée le moût filtré.

2. Bougie filtrante pour la mise en oeuvre du procédé selon la revendication 1, avec un corps de filtre (2) de forme tubulaire, qui est constitué d'un fil (17) enroulé en spirale, des fentes (11) étant prévues entre les spires de fils, en tant que passages pour fluide,
**caractérisée en ce que**
la surface extérieure (20) d'une spire de fil, qui se situe sur le côté extérieur du corps de filtre (2), présente une largeur de 0,5 à 0,8 mm et une largeur de fente s entre les spires de fil dans une plage de 0,03 à 0,08 mm, et que la hauteur de la bougie filtrante est comprise entre 2 et 4 m, en particulier entre 2 et 3 m.

3. Bougie filtrante selon la revendication 2,
**caractérisée en ce que**
les surfaces extérieures (20) sont parallèles à l'axe longitudinal (L) de la bougie filtrante (1).

4. Bougie filtrante selon la revendication 2,
**caractérisée en ce que**
les surfaces extérieures (20) sont inclinées selon un angle (α) par rapport à l'axe longitudinal (L) de la bougie filtrante.

5. Bougie filtrante selon au moins l'une des revendications précédentes,
**caractérisée en ce que**
le fil (17) présente par rapport au corps de filtre (2), une section transversale diminuant vers l'intérieur qui est soit triangulaire soit quadrangulaire.

6. Bougie filtrante selon au moins l'une des revendications précédentes,
**caractérisée en ce que**
le fil (17) est supporté par un support (3, 4) situé intérieurement.

7. Bougie filtrante selon la revendication 2,
**caractérisée en ce que**
un corps intérieur (3) en particulier un tube intérieur (3) autour duquel le fil (17) est enroulé sur des entretoises (4) est disposé en tant que support.

8. Filtre à alluvionnage comportant une cuve de filtration (13), dans laquelle sont disposées des bougies filtrantes selon les revendications 3 à 10, pour filtrer des fluides.

9. Filtre à alluvionnage selon la revendication 8, dans lequel les bougies filtrantes débouchent dans une évacuation à registre (B).

10. Filtre à alluvionnage selon la revendication 9, qui présente en outre une conduite de bipasse (C) pour moût non filtré.
